# FASCICULE DE BREVET EUROPEEN

(11) **EP 0 676 313 B1**
(45) Date de publication et mention de la délivrance du brevet: **30.06.1999**
(21) Numéro de dépôt: 95400797.7
(22) Date de dépôt: 10.04.1995
(51) Int. Cl.: B60Q 3/04

(54) **Tableau de bord de véhicules, notamment de véhicules automobiles comportant des moyens d'éclairage perfectionnés**
Armaturenbrett für Kraftfahrzeuge mit Beleuchtungseinrichtung
Dashboard for automotive vehicle with lighting device

(30) Priorité: 11.04.1994 FR 9404224
(43) Date de publication de la demande: 11.10.1995
(73) Titulaire: MAGNETI MARELLI FRANCE, 92000 Nanterre (FR)
(72) Inventeur: Guirauton, Pascal, F-95370 Montigny les Cormeilles (FR)
(74) Mandataire: Texier, Christian

(56) Documents cités:
- WO-A-88/03663
- DE-U- 1 855 241
- FR-A- 2 479 948
- FR-E- 46 012
- US-A- 2 999 148

## Description

La présente invention concerne le domaine des tableaux de bord de véhicules, en particulier de véhicules automobiles.

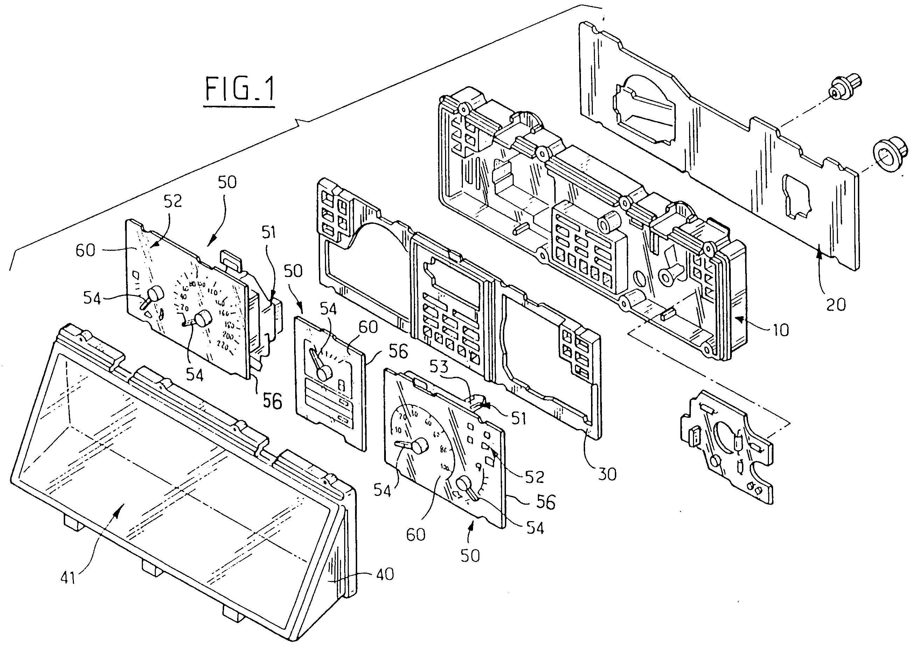

On a représenté sur la figure 1 annexée, en perspective éclatée, la structure générale d'un tableau de bord classique.

On aperçoit sur la figure 1 annexée, un tableau de bord comprenant un boîtier 10, un circuit imprimé 20, un réhaut 30 placé sur la face avant du boîtier 10, une vitre 40 munie d'une vitre transparente 41 placé sur l'avant du réhaut 30 et plusieurs modules indicateurs 50 comprenant chacun une pièce optiquement transparente 56 servant de guide de lumière et un cadran 60.

Le réhaut 30 est formé d'une pièce d'habillage visible qui sert d'entretoise entre la vitre 40 du tableau et la face avant du boîtier 10. Ce réhaut 30 est réalisé fréquemment en acrylonitrile/butadiène/styrène (ABS).

Le plus souvent chaque module indicateur 50 comprend au moins un mouvement de mesure 51 comportant un organe moteur 53 apte à entraîner une aiguille 54 et plusieurs témoins lumineux 52. Les cadrans 60 sont placés en avant des guides de lumière 56, entre ceux-ci et les aiguilles 54. Les cadrans portent diverses indications.

Les cadrans 60 associés aux aiguilles 54 des mouvements de mesure peuvent servir par exemple à visualiser une échelle de compteur de vitesse ou de compte-tour.

Les indications portées sur le cadran 60 peuvent faire l'objet par conséquent d'un grand nombre de variantes.

Généralement les cadrans 60 comprennent des plages translucides éclairées par des sources lumineuses logées dans le boîtier 10, et ce par l'intermédiaire des guides de lumière 56 qui acheminent la lumière en provenance des sources lumineuses vers lesdites plages translucides ainsi que généralement vers les aiguilles 54 réalisées en matériau optiquement transparent à cet effet.

Les pièces 56 formant guide de lumière s'étendent ainsi généralement perpendiculairement à une jupe périphérique du boitier 10 et servent de support aux appareils indicateurs 51.

Certains tableaux de bord comprennent également un "faux cadran". Dans le domaine automobile, on entend par "faux cadran" une pièce d'habillage située en avant des cadrans 60 et comportant des fenêtres à travers lesquelles sont visibles des plages utiles des cadrans et/ou les témoins indicateurs 52.

Le document EP-A-0378739 décrit un tableau de bord pour véhicule automobile comprenant un boîtier, une vitre placée en avant du boîtier, une pièce d'habillage insérée entre la vitre et la face avant du boîtier, au moins un module indicateur, au moins une paroi généralement perpendiculaire à une jupe périphérique du boîtier et qui sert de support au module indicateur, des fenêtres dans au moins une zone de liaison entre la paroi support et la jupe périphérique du boîtier ou de la pièce d'habillage, le boîtier logeant au moins une source lumineuse et le boîtier ou la pièce d'habillage possédant en regard desdites fenêtres des structures optiquement réflectrices/diffusantes aptes à renvoyer vers la face avant de la paroi support et/ou vers des appareils indicateurs la lumière reçue des sources lumineuses par l'intermédiaire des fenêtres.

La présente invention a maintenant pour but de perfectionner les tableaux de bord connus.

Ce but est atteint selon la présente invention grâce à un tableau de bord du type défini en revendication 1 annexée, laquelle est délimitée sous forme d'un préambule et d'une partie caractérisante par rapport au document EP-A-0 378 739.

Comme on l'expliquera par la suite, la structure proposée dans le cadre de la présente invention permet de simplifier très notablement les tableaux de bord par rapport aux systèmes antérieurs connus.

Selon une autre caractéristique avantageuse de l'invention, le boitier, la pièce d'habillage et ladite paroi support généralement perpendiculaire à une jupe périphérique du boitier sont formés d'une pièce unique par moulage de matière plastique.

Selon une autre caractéristique avantageuse de l'invention, la face avant de la paroi support est incurvée, de préférence convexe vers l'avant.

Selon une autre caractéristique avantageuse de l'invention, les aiguilles des appareils indicateurs comprennent des index non rectilignes de contours similaires à l'incurvation de la face avant de la paroi support.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 précédemment décrite représente une vue schématique en perspective éclatée d'un tableau de bord conforme à l'état de la technique,
- la figure 2 représente une vue en coupe d'un tableau de bord conforme à une première variante de réalisation conforme à la présente invention,
- la figure 3 représente une vue en plan en face avant d'un exemple de tableau de bord conforme à la présente invention, et
- les figures 4 et 5 représentent deux vues schématiques en coupe similaire à la figure 2 de deux variantes de réalisation de tableaux de bord conformes à la présente invention.

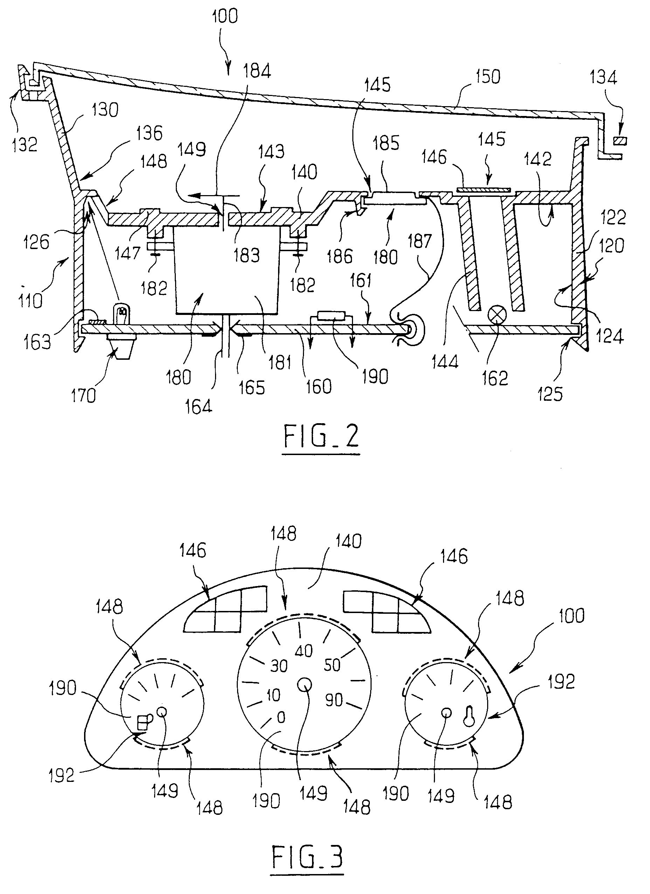

On aperçoit sur les figures 2 et 3 annexées un tableau de bord 100 conforme à la présente invention, comprenant :
- une pièce plastique monobloc 110 qui forme à la fois boîtier 120, pièce d'habillage 130 ou réhaut et paroi support 140,
- une vitre optiquement transparente 150,
- un circuit imprimé 160,
- des sources lumineuses 170, et
- des indicateurs 180.

La pièce 110 est formée de préférence par moulage en matière plastique. La pièce 110 peut faire l'objet de nombreuses géométries. Pour cette raison, elle ne sera pas décrite dans le détail par la suite.

Cette pièce 110 peut être formée à partir d'une matière plastique opaque ou encore à partir d'une matière plastique optiquement transparente pourvue, au moins localement, d'un revêtement, tel qu'une peinture ou un vernis optiquement opaque.

Pour l'essentiel, le boîtier 120 est constitué d'une jupe 122 dont le contour est adapté à la géométrie recherchée pour le tableau de bord. Avantageusement et de façon non limitative, la jupe 122 présente un contour globalement oblong.

Il en est de même de préférence pour la pièce d'habillage ou réhaut 130 qui protège sur l'avant le boîtier 120. Comme on l'a indiqué précédemment, cette pièce d'habillage 130 a pour but essentiel de servir d'entretoise entre le boîtier 120 et la vitre 150.

Alors que la jupe 122 du boîtier 120 présente de préférence une section constante sur toute sa hauteur, le cas échéant, comme on le voit sur la figure 2, la pièce d'habillage ou réhaut 130 peut diverger au moins légèrement en éloignement du boîtier 120.

La pièce d'habillage 130 supporte au niveau de son contour d'ouverture avant la vitre 150. Cette vitre 150 est formée d'une plaque optiquement transparente, de polycarbonate ou de poly(méthacrylate de méthyle) ou encore de tout matériau équivalent.

La vitre 150 est fixée sur le contour avant de la pièce d'habillage 130 par tout moyen approprié, par exemple par encliquetage sur des structures complémentaires 132, 134 formées sur le réhaut ou pièce d'habillage 130. De telles structures d'encliquetage 132, 134 ne sont représentées que schématiquement sur les figures annexées. Elles peuvent faire l'objet de nombreuses variantes de réalisation et ne seront donc pas décrites dans le détail par la suite. En variante la vitre 150 peut être fixée sur la pièce d'habillage 130 par tout autre moyen tel que par exemple sertissage, ultra-sons, collage, soudure à chaud.

La paroi support 140 est formée essentiellement d'une paroi généralement plane qui s'étend perpendiculairement à la jupe 122 du boîtier 120 et à la pièce d'habillage 130. La paroi support 140 se raccorde, par sa périphérie sur la surface interne de la jupe 122 du boîtier 120 ou sur la surface interne de la pièce d'habillage 130.

Comme on le voit sur les figures annexées, la paroi 140 porte les indicateurs 180.

De préférence, la paroi support 140 est munie en outre, sur sa face arrière 142 de cheminées 144 ou cloisons annulaires transversales à cette surface arrière 142.

Ces cheminées 144 sont placées, d'une part en regard de témoins lumineux 162 supportés par le circuit imprimé 160, d'autre part en regard de fenêtres 145 formées dans la paroi 140. Ces fenêtres 145 sont pourvues de voyants 146. Ces voyants 146 sont de préférence formés de plages colorées, ou encore sont munis de symboles représentant, de façon connue en soi, la fonction associée au témoin 162 correspondant, par exemple un symbole de réservoir de carburant pour le témoin 162 utilisé pour visualiser la présence d'un niveau minimum de carburant dans le réservoir du véhicule.

En pratique, un tel voyant 146 peut être formé d'une pièce plastique moulée rapportée dans la fenêtre 145 et fixée à ce niveau par tout moyen approprié, tel que par exemple collage ou soudure aux ultrasons, ou encore peut être formé d'une feuille de matière plastique souple, par exemple connue et commercialisée sous la dénomination "Makrofold" pourvue de symboles comme indiqué précédemment.

Selon encore une autre variante, si la pièce 110 est réalisée en matériau optiquement transparent, on peut prévoir d'intégrer le voyant 146 dans la masse de cette pièce moulée 110 et de réaliser les symboles sur la face avant de ce voyant 146 par dépôt d'un revêtement adéquat sous forme d'une peinture ou d'un vernis par exemple.

On aperçoit de tels voyants 146 sur la figure 3. Bien entendu le mode de réalisation représenté sur cette figure ne doit pas être considéré comme limitatif.

De préférence, la paroi 140 est pourvue dans sa zone périphérique de liaison avec la surface interne de la jupe 122 ou avec la surface interne de la pièce d'habillage 130, de fenêtres optiquement transparentes 148.

Lorsque la pièce 110 est réalisée par moulage d'une matière plastique opaque, de telles fenêtres 148 sont formées de logements vides de matière plastique et préservées lors du moulage à l'aide de tiroirs ou d'empreintes complémentaires.

En revanche, lorsque la pièce 110 est formée par moulage d'une matière plastique optiquement transparente, de telles fenêtres 148 peuvent être formées sous forme d'une masse de matière plastique optiquement transparente non recouverte de revêtement opaque par la suite.

En outre, la surface interne 124 du boîtier 120 ou la surface interne 136 de la pièce d'habillage 130 est pourvue de structures optiquement réflectrices/diffusantes en regard des fenêtres 148, lesquelles structures optiquement réflectrices/diffusantes sont adaptées pour renvoyer vers la face avant 143 de la paroi support 140 et/ou vers les appareils indicateurs 180 la lumière reçue en provenance des sources lumineuses 170.

Sur la figure 2 annexée, on a schématisé de telles structures optiquement réflectrices/diffusantes sous la référence 126, sur la face interne 124 du boîtier 120. Cette disposition n'est cependant aucunement limitative.

Par ailleurs, les fenêtres 148 peuvent être placées en aval des structures optiquement réflectrices/diffusantes 126 comme illustré sur la figure 2, ou en amont de ces structures 126.

Ces structures optiquement réflectrices/diffusantes 126 peuvent être formées de tout moyen approprié connu de l'homme de l'art, par exemple de structures venues de moulage sur la face interne 124 du boîtier 120 ou sur la face interne 136 de la pièce d'habillage 130, de structures réflectrices/diffusantes rapportées sur la surface interne 124 du boîtier 120 ou sur la surface interne 136 de la pièce d'habillage 130, de revêtement réflecteur déposé sur sa surface interne, par exemple d'une peinture, encre ou vernis, ou encore d'hologrammes venus du moulage sur ces surfaces internes ou rapportées sur celles-ci, ou des gravures laser.

Selon encore une autre variante de réalisation, on peut réaliser la pièce 110 par moulage d'une matière plastique de couleur blanche, de sorte que l'on obtient automatiquement par contrôle de l'état de surface de la pièce moulée une surface optiquement réflectrice/diffusante.

Sur la figure 3, on a schématisé six plages de fenêtres 148 entourant partiellement deux à deux et en positions sensiblement diamétralement opposées, des indicateurs respectifs à aiguilles 180.

Selon une autre caractéristique avantageuse de l'invention, la section de chaque fenêtre 148 considérée en plan, parallèlement à la paroi support 140, est limitée de sorte qu'un observateur ou conducteur de véhicule ne décèle pas la présence de ces fenêtres 148.

A cet effet, on peut prévoir à l'intérieur du boîtier 120, par exemple sur la face avant 161 du circuit imprimé 160, et en regard des fenêtres 148, des plages 163 de même couleur et aspect que la face avant 143 de la pièce 140.

Eventuellement, comme on l'a schématisé sur la figure 2, la pièce support 140 peut être non plane mais formée de différents niveaux étagés sur la profondeur du tableau. Cette disposition permet d'obtenir différents niveaux d'affichage.

Les indicateurs 180 peuvent faire l'objet de nombreuses variantes de réalisation.

On a schématisé sur la figure 2 un indicateur 181 de type logomètre et un indicateur 185 de type afficheur à cristaux liquides.

Le logomètre 181 est de préférence fixé sur la face arrière 142 de la paroi support 140. Le logomètre 180 peut être fixé à cet effet par tout moyen approprié, par exemple à l'aide de vis 182 ou encore par encliquetage d'étriers ou pièces similaires sur des structures venues de moulage sur la face arrière 142 de la paroi 140.

La paroi 140 est pourvue d'un alésage traversant 149. Cet alésage 149 reçoit en traversée l'axe 183 du logomètre 181 de sorte que l'aiguille 184 liée à cet axe 183 soit disposée et visible sur l'avant de la paroi 140.

L'alimentation électrique du logomètre 181 peut être obtenue par tout moyen approprié, par exemple par l'engagement de broches 164 liées au logomètre 181 sur des pinces 165 ou moyens équivalents liés au circuit imprimé 160.

L'afficheur à cristaux liquides 185 est placé dans une fenêtre 145 formée dans la paroi 140. L'afficheur à cristaux liquides 185 peut être immobilisé dans cette fenêtre 145 par tout moyen approprié, par exemple par encliquetage sur des structures 186 venues de moulage à cet effet sur la face arrière 142 de la paroi support 140 ou encore par tout moyen approprié, par exemple par collage.

En outre, l'afficheur à cristaux liquides 185 est alimenté, à partir du circuit imprimé 160 par tout moyen de liaison approprié, par exemple un circuit imprimé souple 187 comme cela est schématisé sur la figure 2, et/ou par l'intermédiaire d'un empilement de couches élastomères alternativement électriquement conductrices et électriquement isolantes connues et commercialisées généralement sous la dénomination "Zebra".

Le circuit imprimé 160 est un circuit rigide qui supporte, outre les sources lumineuses 170 et témoins lumineux 162 l'ensemble des composants 190 conçu pour assurer la commande des diverses fonctions du tableau de bord.

Le circuit imprimé rigide 160 est fixé et obture le contour arrière de la jupe 122 du boîtier 120. A cet effet, le contour du circuit imprimé 160 est de préférence complémentaire de la section droite de la jupe 122.

Le circuit imprimé 160 est fixé par tout moyen approprié sur le contour arrière de la jupe 122, par exemple par encliquetage dans une gorge 125 formée sur la face interne 124 de la jupe 122 comme représenté sur la figure 2.

Bien entendu, les logomètres 181 peuvent être remplacés par tout mouvement de mesure équivalent, par exemple un moteur pas à pas.

Le cas échéant la paroi support 140 peut être pourvue sur sa face avant 143, autour de chaque alésage 149 recevant l'axe 183 d'un tel mouvement de mesure, et par conséquent au regard de l'aiguille 184 associée, d'une impression, par exemple une impression à chaud ou encore toute impression équivalente, telle que par sérigraphie ou jet d'encre, représentant des indications associées à cette aiguille 184, telle que par exemple une échelle graduée, comme on le voit par exemple sur la figure 3.

Sur cette figure de telles impressions portent la référence générale 190.

Ces impressions 190 peuvent comprendre également des symboles comme cela est schématisé en 192.

Ces impressions 190 peuvent être formées d'un simple revêtement de peinture, ou encore d'un revêtement localement réflecteur/diffuseur, voire par exemple d'un revêtement constitué au moins localement par un matériau photophore, c'est-à-dire comportant des particules d'un matériau apte à provoquer un changement de longueur d'ondes dans la lumière reçue, préférentiellement adaptée pour transformer une lumière incidente d'éclairage invisible en une lumière réémise visible.

Un tel matériau photophore peut être déposé par exemple au niveau des échelles graduées, ou encore des symboles 192 sur les impressions 190.

En variante, les symboles, échelles, chiffres, sigles et équivalents associés aux indicateurs 180 peuvent être formés par moulage en relief ou en creux sur la face avant de la paroi 140, comme on le voit sous la référence 147 sur la figure 2, ces reliefs et/ou creux pouvant être recouverts de vernis, peinture, encre ou équivalent.

Selon encore une autre variante, ces reliefs et/ou creux peuvent être obtenus par usinage, notamment au laser.

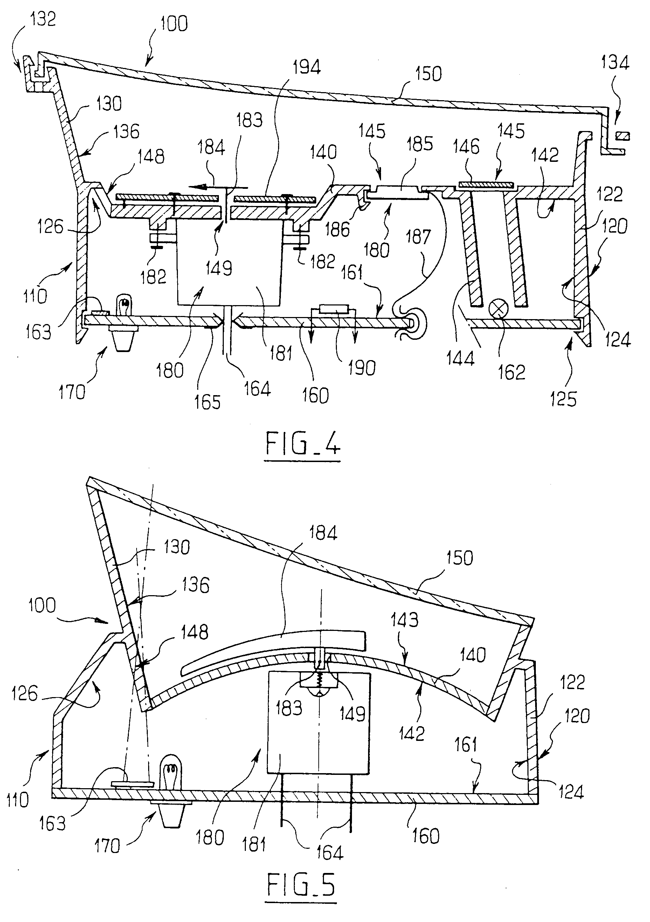

Selon une autre variante schématisée sur la figure 4, les impressions 190 précitées peuvent être remplacées par des cadrans 194 rapportés sur la face avant de la paroi 140. De tels cadrans 194 peuvent être formés de toute structure appropriée connue de l'homme de l'art et fixés par tout moyen connu approprié. Ils ne seront donc pas décrits dans le détail par la suite.

Selon une autre caractéristique avantageuse de l'invention, comme on le voit sur la figure 5, pour optimiser l'éclairage de la face avant 143 de la paroi 140, et des appareils indicateurs 180, à partir des structures optiquement réflectrices/diffusantes 126, la paroi 140 peut être non point plane, mais globalement curviligne, par exemple de courbure continue telle que cylindrique ou sphérique, convexe vers l'avant, c'est-à-dire en direction d'un observateur.

En variante, la face avant 143 de la paroi 140 peut être concave en direction d'un observateur.

Selon encore une autre variante, la face avant 143 de la paroi 140 peut présenter non point une courbure continue, mais être délimitée par différents plans inclinés entre eux.

De préférence, le sommet de la paroi support 140, c'est-à-dire le point de cette paroi support 140 le plus proche de l'observateur est situé sensiblement au centre de ladite paroi 140.

Comme on le voit sur la figure 5, en outre selon l'invention l'index 184 d'aiguille est de préférence non rectiligne mais de contour similaire à l'incurvation de la face avant de la paroi support 140. En d'autres termes, l'index d'aiguilles 184 peut être incurvé, à courbure continue, comme représenté sur la figure 5, ou encore formé de différents segments rectilignes inclinés entre eux.

Selon encore une autre variante conforme à la présente invention, on peut prévoir de réaliser un cadran ou faux-cadran venu de moulage avec la pièce 110.

Bien entendu la présente invention n'est pas limitée au mode de réalisation particulier qui vient d'être décrit mais s'étend à toute variante conforme à son esprit.

On notera que par rapport aux tableaux de bord antérieurs connus, la présente invention offre notamment l'avantage d'une simplification notable, en particulier par réduction du nombre de pièces, tout particulièrement suppression du guide de lumière classique dans les tableaux de bord commercialisés de nos jours, et éventuellement suppression des cadrans rapportés.

## Revendications

1. Tableau de bord pour véhicules, notamment pour véhicules automobiles comprenant :
un boîtier (120),
une vitre (150) placée en avant du boîtier (120),
une pièce d'habillage (130) insérée entre la vitre (150) et la face avant du boîtier (120),
au moins un module indicateur (180),
au moins une paroi (140) généralement perpendiculaire à une jupe (122) périphérique
du boîtier et qui sert de support au module indicateur (180),
des fenêtres (148) dans au moins une zone de liaison entre la paroi support (140) et la jupe périphérique (122) du boîtier (120) ou de la pièce d'habillage (130),
le boîtier (120) logeant au moins une source lumineuse (170), et
le boîtier (120) ou la pièce d'habillage (130) possédant, en regard desdites fenêtres (148), des structures optiquement réflectrices/diffusantes (126) aptes à renvoyer vers la face avant (143) de la paroi support (140) et/ou vers des appareils indicateurs (180) la lumière reçue des sources lumineuses (170), par l'intermédiaire des fenêtres (148) caractérisé par le fait qu'il comprend deux plages de fenêtres (148) sensiblement diamétralement opposées, associées à chaque appareil indicateur à aiguille (181).

2. Tableau selon la revendication 1, caractérisé par le fait que le boitier (120), la pièce d'habillage (130) et la paroi support (140) généralement perpendiculaire à la jupe (122) périphérique du boitier sont formés d'une pièce unique par moulage de matière plastique.

3. Tableau selon l'une des revendications 1 ou 2, caractérisé par le fait que la face avant (143) de la pièce support (140) est incurvée.

4. Tableau selon l'une des revendications 1 à 3, caractérisé par le fait que la face avant (143) de la pièce support (140) est convexe en direction d'un observateur.

5. Tableau selon l'une des revendications 3 ou 4, caractérisé par le fait que la face avant (143) de la pièce support (140) présente une courbure continue, par exemple de type cylindrique ou sphérique.

6. Tableau selon l'une des revendications 3 ou 4, caractérisé par le fait que la face avant (143) de la pièce support (140) est formée de différents plans inclinés entre eux.

7. Tableau selon l'une des revendications 3 à 6, caractérisé par le fait que des aiguilles d'appareil indicateur possèdent des index (184) non rectilignes de contour similaire à l'incurvation de la face avant (143) de la paroi support (140).

8. Tableau selon l'une des revendications 2 à 7, caractérisé par le fait que la pièce monobloc (110) formant boitier (120), pièce d'habillage (130) et paroi support (140) est réalisée en matière plastique optiquement opaque.

9. Tableau selon l'une des revendications 2 à 7, caractérisé par le fait que la pièce monobloc (110) formant boitier (120), pièce d'habillage (130) et pièce support (140) est réalisée en un matériau plastique optiquement transparent au moins localement pourvu d'un revêtement opaque.

10. Tableau selon l'une des revendications 1 à 9, caractérisé par le fait que la paroi support (140) est pourvue sur sa face arrière (142) d'au moins une cheminée (144) placée en regard d'un témoin lumineux (162).

11. Tableau selon l'une des revendications 1 à 10, caractérisé par le fait que les structures optiquement réflectrices/diffusantes (126) sont choisies dans le groupe comprenant : des structures venues de moulage sur la pièce monobloc (110), des structures rapportées sur cette pièce monobloc (110), des revêtements réflecteurs type peinture, encre ou vernis, ou des hologrammes moulés ou rapportés sur la pièce monobloc (110) ou des gravures laser.

12. Tableau selon l'une des revendications 1 à 11, caractérisé par le fait que la section des fenêtres (148) vues en plan parallèlement à la paroi support (140) est limitée de sorte qu'un observateur ne puisse déceler ces fenêtres.

13. Tableau selon l'une des revendications 1 à 12, caractérisé par le fait qu'il comprend un revêtement de même couleur et de même aspect que la face avant (143) de la pièce support (140), en regard des fenêtres (148), à l'intérieur du boitier (120), par exemple sur la face avant d'un circuit imprimé (160).

14. Tableau selon l'une des revendications 1 à 13, caractérisé par le fait que la paroi support (140) est non plane pour former différents niveaux d'affichage.

15. Tableau selon l'une des revendications 1 à 14, caractérisé par le fait qu'il comprend un circuit imprimé rigide (160) fixé sur le contour arrière du boitier (120).

16. Tableau selon la revendication 15, caractérisé par le fait que le circuit imprimé (160) est fixé sur le contour arrière du boitier (120) par encliquetage.

17. Tableau selon l'une des revendications 1 à 16, caractérisé par le fait que la paroi support (140) est pourvue sur sa face avant (143), au moins localement, d'impressions (190), par exemple d'impressions à chaud, ou laser ou sérigraphie ou jet d'encre

18. Tableau selon la revendication 17, caractérisé par le fait que la paroi support (140) est pourvue sur sa face avant (143)de formes en relief ou en creux (147) délimitant le contour desdites impressions.

19. Tableau selon l'une des revendications 1 à 18, caractérisé par le fait que la paroi support (140) est pourvue sur sa face avant (143) d'un cadran (194) rapporté.

20. Tableau selon l'une des revendications 1 à 19, caractérisé par le fait qu'il comprend en outre un faux cadran venu de moulage avec la pièce monobloc (110).

21. Tableau selon l'une des revendications 1 à 20, caractérisé par le fait que la vitre (150) est fixée par encliquetage sur le contour avant de la pièce d'habillage (130).

## Claims

1. Dashboard for vehicles, particularly motor vehicles, comprising:
a housing (120),
a window (150) placed in front of the housing (120),
a piece of trim (130) inserted between the window (150) and the front face of the housing (120),
at least one indicator module (180),
at least one wall (140) generally perpendicular to a peripheral skirt (122) of the housing and which acts as a support for the indicator module (180),
openings (148) in at least one region of connection between the support wall (140) and the peripheral skirt (122) of the housing (120) or of the piece of trim (130),
the housing (120) containing at least one light source (170), and
the housing (120) or the piece of trim (130) having, opposite the said openings (148), optically reflective/diffusing structures (126) capable of transmitting light received from the light sources (170) through the openings (148), towards the front face (143) of the support wall (140) and/or towards the indicators (180) characterized in that it comprises two sets of openings (148) essentially diametrically opposed, associated with each pointer-type indicator (181).

2. Dashboard according to Claim 1, characterized in that the housing (120), the piece of trim (130) and the support wall (140) generally perpendicular to the peripheral skirt (122) of the housing are formed as a single piece by moulding from plastic.

3. Dashboard according to either of Claims 1 and 2, characterized in that the front face (143) of the support piece (140) is curved.

4. Dashboard according to one of Claims 1 to 3, characterized in that the front face (143) of the support piece (140) is convex, bowing outwards towards an observer.

5. Dashboard according to either of Claims 3 and 4, characterized in that the front face (143) of the support piece (140) has a continuous curvature, for example of the cylindrical or spherical type.

6. Dashboard according to either of Claims 3 and 4, characterized in that the front face (143) of the support piece (140) is formed of various planes at angles to each other.

7. Dashboard according to one of Claims 3 to 6, characterized in that pointers of the indicator have hands (184) which are not straight and have a contour similar to the curvature of the front face (143) of the support wall (140).

8. Dashboard according to one of Claims 2 to 7, characterized in that the one-piece part (110) forming the housing (120), the piece of trim (130) and the support wall (140) is made of an optically opaque plastic.

9. Dashboard according to one of Claims 2 to 7, characterized in that the one-piece part (110) forming the housing (120), the piece of trim (130) and the support piece (140) is made of an optically transparent plastic with, at least locally, an opaque coating.

10. Dashboard according to one of Claims 1 to 9, characterized in that the support wall (140) is equipped on its rear face (142) with at least one tube (144) placed facing an indicator lamp (162).

11. Dashboard according to one of Claims 1 to 10, characterized in that the optically reflective/diffusing structures (126) are chosen from the group comprising: structures formed by moulding on the one-piece part (110), structures attached to this one-piece part (110), reflective coatings of the paint, ink or lacquer type, or holograms moulded into or attached to the one-piece part (110) or laser etching.

12. Dashboard according to one of Claims 1 to 11, characterized in that the cross section of the openings (148) viewed in a plane parallel to the support wall (140) is limited in such a way that an observer cannot detect these openings.

13. Dashboard according to one of Claims 1 to 12, characterized in that it comprises a coating of the same colour and the same appearance as the front face (143) of the support piece (140) facing the openings (148) inside the housing (120), for example on the front face of a printed circuit (160).

14. Dashboard according to one of Claims 1 to 13, characterized in that the support wall (140) is non-planar in order to form various display levels.

15. Dashboard according to one of Claims 1 to 14, characterized in that it comprises a rigid printed circuit (160) fixed to the rear contour of the housing (120).

16. Dashboard according to Claim 15, characterized in that the printed circuit (160) is fixed to the rear contour of the housing (120) by snap-fastening.

17. Dashboard according to one of Claims 1 to 16, characterized in that the support wall (140) is equipped on its front face (143), at least locally, with printing (190), for example hot or laser or screen or ink-jet printing.

18. Dashboard according to Claim 17, characterized in that the support wall (140) is equipped on its front face (143) with raised or indented shapes (147) delimiting the outline of the said printing.

19. Dashboard according to one of Claims 1 to 18, characterized in that the support wall (140) is equipped on its front face (143) with an attached dial (194).

20. Dashboard according to one of Claims 1 to 19, characterized in that it further comprises a dummy dial moulded with the one-piece part (110).

21. Dashboard according to one of Claims 1 to 20, characterized in that the window (150) is snap-fastened to the front contour of the piece of trim (130).

## Patentansprüche

1. Armaturenbrett für Fahrzeuge, insbesondere für Kraftfahrzeuge mit:
einem Gehäuse (120),
einer Fensterscheibe (150), welche auf der Vorderseite des Gehäuses (120) angeordnet ist,
einem Verkleidungsteil (130), welches zwischen der Fensterscheibe (150) und der Vorderseite des Gehäuses (120) eingesetzt ist,
zumindest einem Anzeigemodul (180),
zumindest einer Wand (140), welche allgemein senkrecht zu einer Umfangsverkleidung (122) des Gehäuses ist, und welche als Stütze für das Anzeigemodul (180) dient,
Fenstern (148) in zumindest einem Verbindungsbereich zwischen der Stützwand (140) und der Umfangsverkleidung (122) des Gehäuses (120) oder des Verkleidungsteils (130),
wobei das Gehäuse (120) zumindest eine Lichtquelle (170) unterbringt,
wobei das Gehäuse (120) oder das Verkleidungsteil (130) gegenüber den Fenstern (148) optisch reflektierende/diffundierende Strukturen (126) besitzt, welche dafür eingerichtet sind, das von den Lichtquellen (170) mittels der Fenster (148) erhaltene Licht zu der Vorderseite (143) der Stützwand (140) und/oder zu den Anzeigegeräten (180) hin zurückzusenden, dadurch gekennzeichnet, daß es zwei praktisch diametral entgegengesetzte Fensterbereiche (148) aufweist, welche jedem Anzeigegerät mit Nadel (181) zugeordnet sind.

2. Armaturenbrett gemäß Anspruch 1, dadurch gekennzeichnet, daß das Gehäuse (120), das Verkleidungsteil (130) und die Stützwand (140), welche allgemein senkrecht zu der Umfangsverkleidung (122) des Gehäuses ist, durch Formpressen von Kunststoffmaterial aus einem einzigen Stück gebildet sind.

3. Armaturenbrett gemäß einem der Ansprüche 1 oder 2, dadurch gekennzeichnet, daß die Vorderseite (143) des Stützteils (140) bogenförmig gekrümmt ist.

4. Armaturenbrett gemäß einem der Ansprüche 1 bis 3, dadurch gekennzeichnet, daß die Vorderseite (143) des Stützteils (140) konvex in Richtung eines Betrachters ist.

5. Armaturenbrett gemäß einem der Ansprüche 3 oder 4, dadurch gekennzeichnet, daß die Vorderseite (143) des Stützteils (140) eine durchgehende Krümmung, z.B. der zylindrischen oder kugelförmigen Art, aufweist.

6. Armaturenbrett gemäß einem der Ansprüche 3 oder 4, dadurch gekennzeichnet, daß die Vorderseite (143) des Stützteils (140) aus verschiedenen zueinander schrägen Ebenen gebildet ist.

7. Armaturenbrett gemäß einem der Ansprüche 3 bis 6, dadurch gekennzeichnet, daß die Anzeigegerätenadeln nicht-geradlinige Zeiger (184) von ähnlicher Kontur wie die Krümmung der Vorderseite (143) der Stützwand (140) besitzen.

8. Armaturenbrett gemäß einem der Ansprüche 2 bis 7, dadurch gekennzeichnet, daß das Einblockteil (110), welches das Gehäuse (120), das Verkleidungsteil (130) und die Stützwand (140) bildet, aus optisch undurchsichtigem Kunststoffmaterial hergestellt ist.

9. Armaturenbrett gemäß einem der Ansprüche 2 bis 7, dadurch gekennzeichnet, daß das Einblockteil (110), welches das Gehäuse (120), das Verkleidungsteil (130) und die Stützwand (140) bildet, aus optisch durchsichtigem Kunststoffmaterial hergestellt ist, welches zumindest örtlich mit einer undurchsichtigen Beschichtung versehen ist.

10. Armaturenbrett gemaß einem der Ansprüche 1 bis 9, dadurch gekennzeichnet, daß die Stützwand (140) auf ihrer Hinterseite (142) mit zumindest einem Schacht (144) versehen ist, welcher gegenüber einer Kontrolleuchte (162) angeordnet ist.

11. Armaturenbrett gemäß einem der Ansprüche 1 bis 10, dadurch gekennzeichnet, daß die optisch reflektierenden/diffundierenden Strukturen (126) aus der Gruppe gewählt sind, welche aufweist: Strukturen, welche durch Formpressen auf dem Einblockteil (110) hergestellt werden, Strukturen, welche auf dieses Einblockteil (110) aufgesetzt werden, reflektierende Beschichtungen der Art Farbe, Tinte oder Lack, oder Hologramme, welche auf dem Einblockteil (110) formgepreßt oder aufgesetzt werden, oder Lasergravuren.

12. Armaturenbrett gemäß einem der Ansprüche 1 bis 11, dadurch gekennzeichnet, daß der Abschnitt der Fenster (148), welche in der zu der Stützwand (140) parallel liegenden Ebene zu sehen sind, begrenzt ist, so daß ein Betrachter diese Fenster nicht erkennen kann.

13. Armaturenbrett gemäß einem der Ansprüche 1 bis 12, dadurch gekennzeichnet, daß es eine Beschichtung von der gleichen Farbe und dem gleichen Aussehen wie die Vorderseite (143) des Stützteils (140) gegenüber den Fenstern (148), im Inneren des Gehäuses (120), z.B. auf der Vorderseite einer gedruckten Schaltung (160 aufweist.

14. Armaturenbrett gemäß einem der Ansprüche 1 bis 13, dadurch gekennzeichnet, daß die Stützwand (140) nicht eben ist, um verschiedene Anzeigeebenen zu bilden.

15. Armaturenbrett gemäß einem der Ansprüche 1 bis 14, dadurch gekennzeichnet, daß es eine steife gedruckte Schaltung (160) aufweist, welche auf dem hinteren Umriß des Gehäuses (120) befestigt ist.

16. Armaturenbrett gemäß Anspruch 15, dadurch gekennzeichnet, daß die gedruckte Schaltung (160) durch Einrasten auf dem hinteren Umriß des Gehäuses (120) befestigt ist.

17. Armaturenbrett gemäß einem der Ansprüche 1 bis 16, dadurch gekennzeichnet, daß die Stützwand (140) auf ihrer Vorderseite (143) zumindest örtlich mit Aufdrucken (190), z.B. Heiß- oder Laser- oder Siebdruck- oder Tintenstrahlaufdrucken, versehen ist.

18. Armaturenbrett gemäß Anspruch 17, dadurch gekennzeichnet, daß die Stützwand (140) auf ihrer Vorderseite (143) mit Erhöhungs- oder Aushöhlungsformen (147) versehen ist, welche den Umriß der Aufdrucke begrenzen.

19. Armaturenbrett gemäß einem der Ansprüche 1 bis 18, dadurch gekennzeichnet, daß die Stützwand (140) auf ihrer Vorderseite (143) mit einer aufgesetzten Skalenscheibe (194) versehen ist.

20. Armaturenbrett gemäß einem der Ansprüche 1 bis 19, dadurch gekennzeichnet, daß es außerdem eine falsche Skala aufweist, welche aus dem Formpressen mit dem Einblockteil (110) hergestellt wird.

21. Armaturenbrett gemäß einem der Ansprüche 1 bis 20, dadurch gekennzeichnet, daß die Fensterscheibe (150) durch Einrasten auf dem Vorderumriß des Verkleidungsteils (130) befestigt ist.
